# EUROPEAN PATENT SPECIFICATION

(11) **EP 2 247 499 B1**
(45) Date of publication and mention of the grant of the patent: **14.03.2012**
(21) Application number: 09704550.4
(22) Date of filing: 26.01.2009
(51) Int. Cl.: B64C 25/34

(54) **LANDING GEAR**
FAHRWERK
TRAIN D'ATTERRISSAGE

(30) Priority: 24.01.2008 IT RM20080043
(43) Date of publication of application: 10.11.2010
(73) Proprietor: MAGNAGHI AERONAUTICA S.P.A., 80142 Napoli (IT)
(72) Inventor: NARDONE, Flora, I-80142 Napoli (NA) (IT); CARRERAS, Giuseppe, I-80142 Napoli (NA) (IT)
(74) Representative: Leone, Mario
(86) International application number: PCT/IB2009/050302
(87) International publication number: WO 2009/093223

(56) References cited:
- FR-A- 1 212 900
- GB-A- 820 217
- GB-A- 911 121

## Description

The present invention refers to an landing gear for aircrafts, of the "bogie" type, with double wheels in the front and in the back, in general comprising one or more front wheels and one or more rear wheels connected to a rocking beam, and at least a shock absorbing element (see e.g. document GB911121).

This kind of landing gears is frequently used in medium or big aircrafts.

Similar landing gears are known, but they are quite heavy and requires wide installation spaces for their structure and the system for retracting them in the nacelle.

Therefore, these two factors limits the use of this kind of landing gears, as these factors influence the vehicle performances.

The technical problem underlying the present invention is to provide an aeronautical landing gear allowing to overcome the above-mentioned drawbacks with reference to the known art.

Such problem is solved by a landing gear as above specified, characterized in that the rocking arm ends of the shock absorbing element which are distal to all the wheels are articulated on a lever element hingeable on the aircraft frame, onto which lever means for rotating said lever element acts between a position wherein the wheels have an operative configuration and a position wherein the wheels are retracted within the landing gear bay.

The use of the above-mentioned structure allows remarkable weight and dimensions reductions.

A preferred exemplificative embodiment of such landing gear will be hereby described, only as a non-limiting example, with reference to the annexed figures, wherein
* figure 1 is a perspective view of a landing gear according to the invention; and
* figure 2 is a side view of the landing gear of figure 1, showing both the operative configuration of the landing gear and its retracted position.

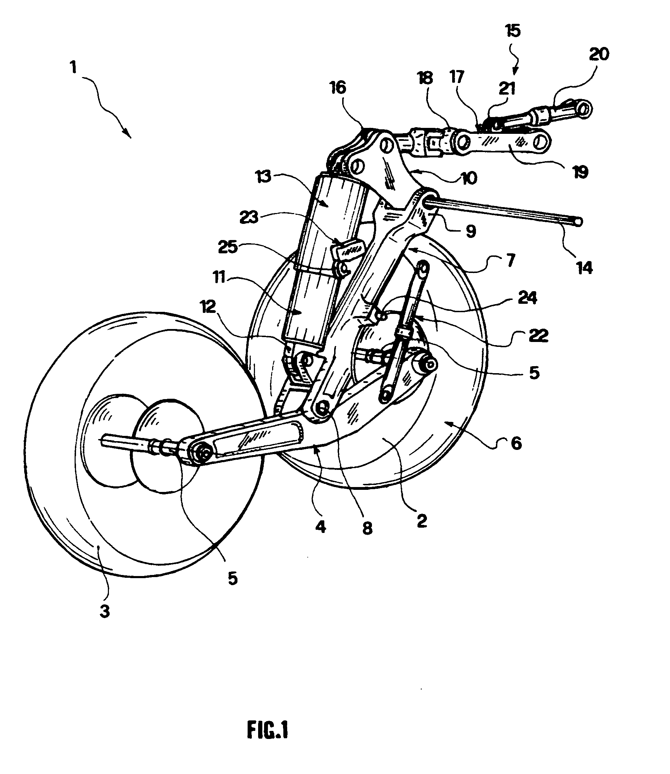

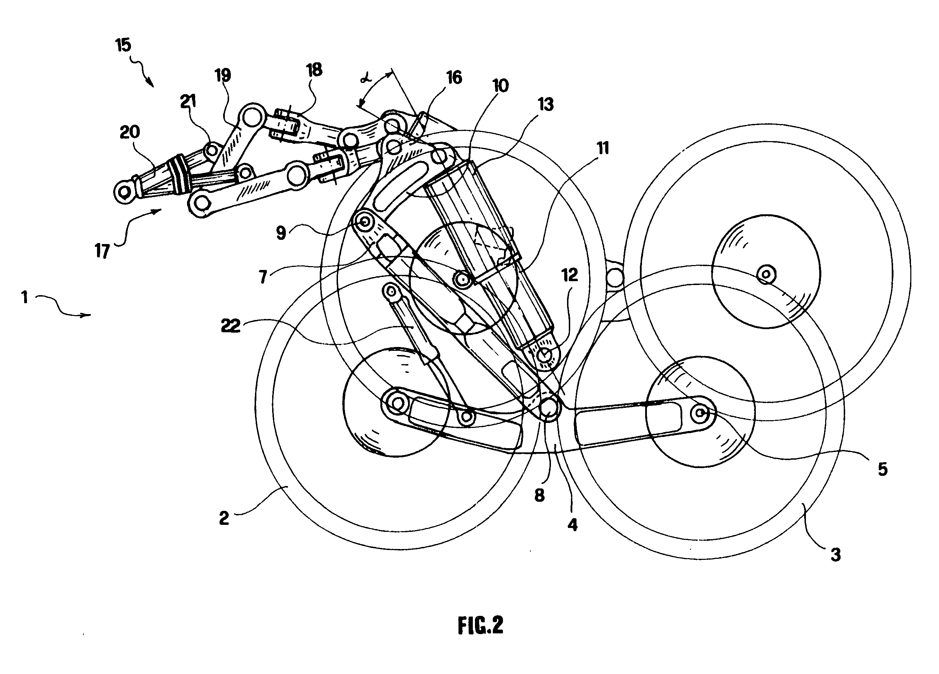

With reference to figures 1 and 2, an aeronautical landing gear is overall shown with 1. It is of the so-called "bogie" type, and accordingly it has a pair of wheels, front 2 and rear 3, connected by a beam 4.

In the present exemplificative embodiment, the landing gear 1 has a single front wheel 2 and a single rear wheel 3, placed on the same side of the beam 4 and rotatably connected thereto at a respective hub 5.

Moreover, it is intended that each wheel 2, 3 will be provided with a suitable tire 6.

The wheels 2, 3 and the beam 4 are connected to the suspended masses of the aircraft by means of a rocking arm 7, which is rotatably connected to the beam 4 on a first hinge 8 substantially at the center of the beam 4.

The distal end 9 of the rocking arm 7 is instead articulated to a lever element 10, in turn hinged to the suspended mass with respect to the wheels 2, 3, i.e. the aircraft frame.

The linkage between the wheels 2, 3 and the suspended mass is also realized by a shock absorbing element 11, of the oleo-pneumatic kind.

In particular, the shock absorbing element 11 is connected to the rocking arm 7 on a second hinge 12 placed substantially next to said first hinge 8, in this example.

The other end 13 of the shock absorbing element 11 is instead articulated on said lever element 10.

The latter is placed according to the aircraft advancing direction during takeoff and landing. In particular, said first hinge and the end of the lever element onto which the rocking arm 7 is articulated are oriented towards the front or the bow of the aircraft.

Non The lever element 10 is articulated with the aircraft frame at a front end thereof onto which urges the articulated joint of the rocking arm 7 on a single poking position 14.

The shock absorbing element 11 is then connected to the lever element 10 on the other opposed end. The lever element 10, the shock absorbing element 11 and the rocking arm 7 realize an articulate triangle forming the linkage between the suspended masses, i.e. the aircraft, and the beam 4 with the wheels 2, 3.

Since such triangle would be undeformable if it were made of rigid elements, it comprises the shock absorbing element 11 which is capable of absorbing kinetic energy during landing, after contact between wheels 2, 3 and ground. Therefore, the triangle buckles by varying the length of the shock absorbing element 11.

On the lever element 10 means for rotating said lever element 10 acts between a position wherein the wheels 2, 3 are in an operative configuration and a position wherein the wheels 2, 3 are retracted in the landing gear bay, not shown. The means for rotating is overall shown with 15.

The means 15 is articulated on the lever element 10 at an extension 16 thereof, placed next to the articulated joint of the shock absorbing element 11. The means 15 is formed by an articulated arm 17 comprising a first portion 18 and a second portion 19 articulated by means of a cardanic element, said first portion 18 being connected to the lever element 10 and said second portion 19 being connected to the aircraft frame.

On the second portion 19 there is connected a maneuver hydraulic jack 20 at an intermediate articulated joint 21.

The retraction of the actuator 20 causes the rotation of the second portion 19, dragging up the first portion 18, the lever element 10 and the whole triangle to which it belongs.

In such way, the landing gear 1 is retracted, moving towards the front of the aircraft, lying on a vertical plane disposed along the aircraft advancing direction.

The dimensions of the landing gear depends principally on the dimensions of the shock absorbing element 11 and of the lever element 10, thus obtaining a considerable reduction of the overall dimensions inside the aircraft.

In figure 2, the retraction angle is highlighted and shown with α.

When the actuator 20 extends, the wheels 2, 3 are brought down until they reach an operative configuration. In this position, the shock absorbing element 11 is already placed in an optimal position in order to bear loads during landing, and no further supporting and strengthening elements are thus required, thus limiting the overall weight of the landing gear 1.

Anyhow, active and passive means for assuring the correct positioning and the locking of the landing gear 1 and the locking thereof in the landing configuration, as well as means for locking the landing gear when the aircraft is on the ground so as to avoid an erroneous retraction in the landing gear bay are provided.

The articulated arm 17 and the maneuver actuator 20 further extend frontally from the lever element, relative to the aircraft frame, thus without affecting the dimensions of the landing gear 1.

Moreover, the landing gear 1 has a hydraulic control device of the pitch angle 22 (*pitch trimmer*) placed on the front portion of the beam 4 and connected to the aircraft frame.

Although per se known in the art, such device performs the function of maintaining in a substantially horizontal and parallel to the runway position the beam 4, even if during landing the aircraft has a positive pitch, which would raise the front wheel 2.

In turn, as the device 22 reaches its complete extension, it is not fed hydraulically anymore.

Moreover, the landing gear 1 has stopping means 23 of the landing gear of the aircraft, normally installed on the aircraft's fuselage, where the landing gear is retracted in the bay.

To this regard, the rocking arm 7 is provided with a projecting pin 24 apt to cooperate with a hooking system 25, that could be hydraulically or mechanically unhooked by means of an apposite leverage.

To the above-described aeronautical landing gear, a person skilled in the art, in order to satisfy further and contingent needs, could effect several further modifications and variants, all however encompassed in the protective scope of the present invention, as defined by the appended claims.

## Claims

1. A bogie-type landing gear (1) for aircraft, comprising: one or more front wheels (2) and one or more rear wheels (3) connected by a beam (4), a rocking arm (7) centrally and rotatably connected to said beam (4), and a shock absorbing element (11), **characterized in that** the ends (7) of the rocking arm and of the shock absorbing element (11) which are distal to all the wheels (2, 3) are articulated on a lever element (10) hingeable on the aircraft frame, on which lever element (10) means for rotating (15) said lever element (10) acts between a position wherein the wheels (2, 3) are in an operative configuration and a position wherein the wheels (2, 3) are retracted in the landing gear bay.

2. Landing gear (1) according to claim 1, wherein said lever element (10) is articulated to the aircraft frame at a first end thereof onto which the articulated joint of the rocking arm (7) urges on an poking position (14).

3. Landing gear (1) according to claim 2, wherein said lever element (10) is substantially placed along the aircraft advancing direction during landing, said first end being directed towards the bow and the landing gear (1) being of the front retraction type.

4. Landing gear (1) according to claim 3, wherein said shock absorbing element (11) extends between an end of the lever element (10) opposed to said first end and a articulated joint on said rocking arm (7) next to his articulated joint on said beam (4).

5. Landing gear (1) according to any of the preceding claims, wherein said shock absorbing element (11) is of the cylinder-piston oleo-pneumatic kind.

6. Landing gear (1) according to claim 5, wherein the piston is articulated to the beam (4) and the cylinder is articulated to the lever element (10).

7. Landing gear according to any of the preceding claims, having a single front wheel (2) and a single rear wheel (3), placed on the same side of the beam (4).

8. Landing gear according to any of claims 3 to 7, having a pitch compensator (22) placed on the front portion of the beam (4).

9. Landing gear (1) according to any of claims 2 to 8, wherein the means for rotating (15) said lever element (10) is articulated on the lever element (10) at an extension (16) thereof next to the articulated joint of the shock absorbing element (11).

10. Landing gear (1) according to any of claims 2 to 9, wherein the means for rotating (15) said lever element (10) has an articulated arm (17) comprising a first portion (18) and a second portion (19) articulated head to head, said first portion (18) being connected to the lever element (10) and said second portion (19) being connected al aircraft frame.

11. Landing gear according to claim 10, wherein a retractable actuator (20) is rotatably connected to an intermediate articulated joint (21) on said second portion (19), for determining the rotation of the lever element (10).

## Patentansprüche

1. Ein Bogie-Typ Fahrwerk (1) für Flugzeug, aufweisend: ein oder mehrere Vorderreifen (2) und ein oder mehrere Hinterreifen (3) verbunden durch einen Träger (4), einen Schwenkhebel (7), der zentral und drehbar mit dem Träger (4) verbunden ist, und ein Dämpfungselement (11), **dadurch gekennzeichnet, dass** die Enden (7) des Schwenkhebels und des Dämpfungselements (11), die distal zu allen Reifen (2 ,3) sind, beweglich angeordnet sind an einem Hebelelement (10), gelenkig verbindbar an den Flugzeugrahmen, auf das Hebelelement (10) ein Mittel zum Rotieren (15) des Hebelelements (10) wirkt zwischen einer Position, in der die Reifen (2, 3) in einer operativen Konfiguration sind und einer Position, in der die Reifen (2, 3) in das Fahrwerksgestell eingefahren sind.

2. Fahrwerk (1) nach Anspruch 1, wobei das Hebelelement (10) beweglich angeordnet ist an dem Flugzeugrahmen an einem ersten Ende davon, auf das der bewegliche Anschluss des Schwenkhebels (7) an einer Stoßposition (14) drängt.

3. Fahrwerk (1) nach Anspruch 2, wobei das Hebelelement (10) während der Landung im Wesentlichen entlang der Flugzeugvorschubrichtung platziert ist, wobei dieses erste Ende zwischen dem Bug und dem Fahrwerk (1) des Front-Einfahr-Typs angeordnet ist.

4. Fahrwerk (1) nach Anspruch 3, wobei das Dämpfungselement (11) sich zwischen einem Ende des Hebelelements (10) entgegengesetzt zu dem ersten Ende und einem beweglichen Anschluss an dem Schwenkhebel (7) neben seinem beweglichen Anschluss an dem Träger (4) erstreckt.

5. Fahrwerk (1) nach einem der vorhergehenden Ansprüche, wobei das Dämpfungselement (11) eines der pneumatischen Öl-Zylinder-Kolben-Art ist.

6. Fahrwerk (1) nach Anspruch 5, wobei der Kolben beweglich ist zu dem Träger (4) und der Zylinder beweglich ist zu dem Hebelelement (10).

7. Fahrwerk nach einem der vorhergehenden Ansprüche, mit einem einzelnen Vorderreifen (2) und einem einzelnen Hinterreifen (3) platziert auf der gleichen Seite des Trägers (4).

8. Fahrwerk nach einem der Ansprüche 3 bis 7, aufweisend einen Neigungs-Kompensator (22) platziert an dem vorderen Abschnitt des Trägers (4).

9. Fahrwerk (1) nach einem der Ansprüche 2 bis 8, wobei das Mittel zum Rotieren (15) des Hebelelements (10) beweglich angeordnet ist an dem Hebelelement (10) an einer Ausdehnung (16) davon neben dem beweglichen Anschluss des Dämpfungselements (11).

10. Fahrwerk (1) nach einem der Ansprüche 2 bis 9, wobei das Mittel zum Rotieren (15) des Hebelelements (10) einen beweglichen Arm (17) hat, aufweisend einen ersten Abschnitt (18) und einen zweiten Abschnitt (19) beweglich Kopf an Kopf, wobei dieser erste Abschnitt (18) mit dem Hebelelement (10) verbunden ist und der zweite Abschnitt (19) an dem Flugzeugrahmen verbunden ist.

11. Fahrwerk nach Anspruch 10, wobei ein einziehbarer Aktuator (20) drehbar verbunden ist mit einem beweglichen Zwischenanschluss (21) an dem zweiten Abschnitt (19), um die Rotation des Hebelelements (10) zu ermitteln.

## Revendications

1. Train d'atterrissage de type bogie (1) pour aéronef, comportant : une ou plusieurs roues avant (2) et une ou plusieurs roues arrière (3) reliées par un longeron (4), un bras basculant (7) relié de manière centrale et en rotation audit longeron (4), et un élément amortisseur de choc (11), **caractérisé en ce que** les extrémités du bras basculant (7) et de l'élément amortisseur de choc (11) qui sont distales par rapport à toutes les roues (2, 3) sont articulées sur un élément de levier (10) articulable sur le châssis de l'aéronef, sur lequel des moyens d'élément de levier (10) de mise en rotation (15) dudit élément de levier (10) agissent entre une position dans laquelle les roues (2, 3) sont dans une configuration fonctionnelle et une position dans laquelle les roues (2, 3) sont escamotées dans le compartiment du train d'atterrissage.

2. Train d'atterrissage (1) selon la revendication 1, dans lequel ledit élément de levier (10) est articulé sur le châssis de l'aéronef au niveau d'une première extrémité de celui-ci sur laquelle le joint articulé du bras basculant (7) est amené sur une position de poussée (14).

3. Train d'atterrissage (1) selon la revendication 1, dans lequel ledit élément de levier (10) est sensiblement positionné le long de la direction de progression de l'aéronef pendant l'atterrissage, ladite première extrémité étant dirigée vers l'étrave et le train d'atterrissage (1) étant du type à rentrée avant.

4. Train d'atterrissage (1) selon la revendication 3, dans lequel ledit élément amortisseur de choc (11) s'étend entre une extrémité de l'élément de levier (10) opposée à ladite première extrémité et un joint articulé sur ledit bras basculant (7) à côté de son joint articulé sur ledit longeron (4).

5. Train d'atterrissage (1) selon l'une quelconque des revendications précédentes, dans lequel ledit élément amortisseur de choc (11) est du type vérin-piston oléo-pneumatique.

6. Train d'atterrissage (1) selon la revendication 5, dans lequel le piston est articulé sur le longeron (4) et le vérin est articulé sur l'élément de levier (10).

7. Train d'atterrissage selon l'une quelconque des revendications précédentes, ayant une seule roue avant (2) et une seule arrière unique (3), placées sur le même côté du longeron (4).

8. Train d'atterrissage selon l'une quelconque des revendications 3à 7, ayant un compensateur de tangage (22) placé sur la partie avant du longeron (4).

9. Train d'atterrissage (1) selon l'une quelconque des revendications 2 à 8, dans lequel les moyens de mise en rotation (15) dudit élément de levier (10) sont articulés sur l'élément de levier (10) au niveau d'une sortie (16) de celui-ci à côté du joint articulé de l'élément amortisseur de choc (11).

10. Train d'atterrissage (1) selon l'une quelconque des revendications 2 à 9, dans lequel les moyens de mise en rotation (15) dudit élément de levier (10) ont un bras articulé (17) comportant une première partie (18) et une seconde partie (19) articulées en vis-à-vis, ladite première partie (18) étant reliée à l'élément de levier (10) et ladite seconde partie (19) étant reliée au châssis de l'aéronef.

11. Train d'atterrissage selon la revendication 10, dans lequel un actionneur rétractable (20) est relié en rotation à un joint articulé intermédiaire (21) sur ladite seconde partie (19), pour déterminer la rotation de l'élément de levier (10).
